# EUROPEAN PATENT APPLICATION

(11) **EP 3 745 248 A1**
(43) Date of publication of application: **02.12.2020**
(21) Application number: 18724119.5
(22) Date of filing: 23.03.2018
(51) Int. Cl.: G06F 3/14

(54) **DISPLAY DEVICE, ELECTRONIC APPARATUS AND SCREEN DISPLAY CONTROL METHOD**

(30) Priority: 26.01.2018 CN 201810078753
(71) Applicant: Mobvoi Information Technology Co., Ltd., Beijing 100094 (CN)
(72) Inventor: CAO, Huanjie, Haidian District, Beijing (CN); PENG, Saihuang, Haidian District Beijing (CN)
(74) Representative: Cabinet Beau de Loménie
(86) International application number: PCT/CN2018/080295
(87) International publication number: WO 2019/144489

(57) **Abstract**

Provided is a display device, an electronic device and a method of controlling screen display. The display device includes a display screen and at least controllers. At least two types of operating systems respectively run on the at least two controllers. The at least two controllers are respectively connected to the display screen through at least two types of interfaces. The at least two controllers each is configured to, in a respective operating state, control the display screen to display.

## Description

The present application is proposed based on and claims the priority of the Chinese patent application No. 201810078753.2 filed on January 26, 2018, the entirety of which is herein incorporated by reference.

### TECHNICAL FIELD

The present disclosure relates to the technology of electronic device. The present disclosure relates to for example a display device, an electronic device and a method of controlling screen display.

### BACKGROUND

With the rapid development of electronic devices, small wearable electronic devices with a screen such as smartwatches and smart bracelets get more and more attention of users. A user may use a small wearable electronic device to implement various functions through a connection between a built-in intelligent system or an operating system on a smartphone and the network. For example, the user can use the small wearable electronic device to synchronize phone numbers, short messages, emails, photos and music in the phone.

The most of existing small wearable electronic devices uses a single system to drive the screen to display.

Therefore, when the screen of an electronic device displays, the operating system of the electronic device needs to stay in an operating state. When the operating system of the electronic device is complex, the display screen cannot be controlled flexibly.

### SUMMARY

The followings is the summary of the subject matter which will be described herein in detail. The summary is not intended to limit the protection scope of the claims.

In view of the above, the present disclosure provides a display device, an electronic device and a method of controlling screen display, which not only satisfies the requirements on display but also allows to control the display screen flexibly.

In an embodiment, a display device is provided, which includes a display screen and at least two controllers,
at least two operating system each runs on a respective one of the at least two controllers,
the at least two controllers are connected to the display screen through interfaces of a same type, and the at least two controllers each is configured to, in a respective operating state, control the display screen to display.

In an embodiment, the controller includes a master controller and a slave controller,
a master operating system runs on the master controller, a slave operating system runs on the slave controller, and power consumption of the slave operating system is lower than power consumption of the master operating system.

In an embodiment, the master operating system includes an Android operating system (Android OS), and the slave operating system includes a real-time operating system (RTOS).

In an embodiment, the interfaces of the same type include mobile industry processor interfaces (MIPIs),
the master controller and the slave controller each is connected to the display screen through a respective one of the MIPIs,
wherein when the master controller is in a hibernating state, the master controller sets the MIPI of the master controller to a high-impedance state; when the slave controller is in the hibernating state, the slave controller sets the MIPI of the controller to the high-impedance state.

In an embodiment, the master controller is connected to the slave controller,
the master controller is used to trigger the slave controller to enter an operating state when the master controller switches from the operating state to a hibernating state and to trigger the slave controller to enter the hibernating state when the master controller switches from the hibernating state to the operating state.

In an embodiment, an electronic device is further provided, which includes a display device provided by any embodiment.

In an embodiment, a method of controlling screen display is further provided, which includes:
when a master controller switches from an operating state to a hibernating state, using the master controller to stop controlling a display screen to display and trigger a slave controller to enter the operating state; and
when the master controller switches from the hibernating state to the operating state, using the master controller to start controlling the display screen to display and trigger the slave controller to enter the hibernating state,
wherein when the slave controller switches from the hibernating state to the operating state, the slave controller stops controlling the display screen to display, and when the slave controller switches from the operating state to the hibernating state, the slave controller starts controlling the display screen to display.

In an embodiment, the step of using the master controller to stop controlling the display screen to display includes:
using the master controller to close a display driver of the master controller and set the MIPI connected to the display screen to a high-impedance state,
wherein the step of using the master controller to start controlling the display screen to display comprises:
   using the master controller to open the display driver of the master controller and set the MIPI connected to the display screen to an activated state.

In an embodiment, after the master controller triggers the slave controller to enter the operating state, the method further includes:
using the master controller to send basic information to be displayed to the slave controller,
wherein the basic information to be displayed is information displayed by the display screen in the control of the slave controller after the slave controller enters the operating state,
wherein the basic information to be displayed includes at least one of the followings: system time, system date, and data on vital signs.

The present disclosure provides a display device, an electronic device and a method of controlling screen display. Different types of operating systems run on different controllers, and the controllers switch their states according to the requirements on the display device and control the display screen to display. The controllers are connected to the display screen through respective interfaces of a same type. This addresses the problem in the related art that, in the case where the operating system is the only system for driving the screen to display and is complex, the operating system of the display device needs to stay in the operating state and the display screen cannot be controlled flexibly, thereby achieving the effects of satisfying the requirements on display and flexibly controlling the display screen.

Other aspects of the present disclosure can be understood after reading and understanding the drawings and the detailed description.

### BRIEF DESCRIPTION OF DRAWINGS

Fig. 1 is a structure diagram of a display device provided by an embodiment 1;
Fig. 2 is a structure diagram of a display device provided by an embodiment 2;
Fig. 3 is a structure diagram of a display device provided by an embodiment 3;
Fig. 4 is a structure diagram of a display device provided by the embodiment 3;
Fig. 5 is a flow chart of a method of controlling screen display provided by an embodiment 4;
Fig. 6 is a structural block diagram of a device of controlling screen display provided by an embodiment 5; and
Fig. 7 is a structure diagram of an electronic device provided by an embodiment 7.

### DETAILED DESCRIPTION

### Embodiment 1

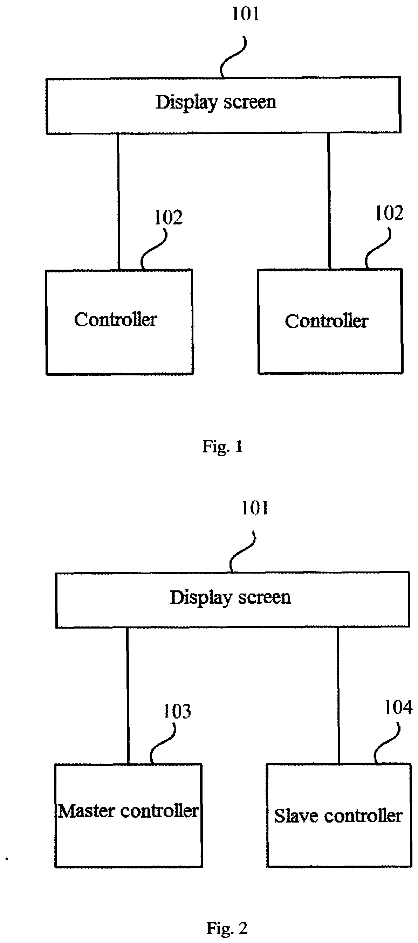

Fig. 1 is a structure diagram of a display device provided by an embodiment 1. The embodiment can satisfy the requirements on display and control the display screen flexibly. As shown in Fig. 1, the display device includes a display screen 101 and at least two controllers 102.
different types of operating systems respectively run on at least two controllers 102,
the at least controllers 102 (i.e., multiple controllers 102) are connected to the display screen 101 through respective interfaces of a same type. Each of the controllers 102 is configured to, in the respective operating state, control the display screen 101 to display.

Different types of operating systems run on different controllers 102 and have different power consumption. In an embodiment, the operating systems include an Android OS and a RTOS. The power consumption of the RTOS is lower than the power consumption of the Android OS. The power consumption of the controller 102 on which the RTOS runs is lower than the power consumption of the controller 102 on which the Android OS runs.

The controllers 102 are connected to the display screen 101 through respective interfaces of a same type. Each controller 102 may be connected to the display screen 101 through the MIPI.

Each controller 102 in the operating state controls the display screen 101 to display. The states of the controllers 102 include operating state and hibernating state. The controllers 102 switch their states according to the requirements of the display device and control the display screen 101 to display. In an embodiment, when the controller 102 on which the operating system with high power consumption switches from the operating state to the hibernating state, this controller 102 stops controlling the display screen 101 to display. At the same time, the controller 102 on which the operating system with low power consumption runs switches from the hibernating state to the operating state and starts controlling the display screen 101 to display. When the controller 102 on which the operating system with high power consumption runs switches from the hibernating state to the operating state, this controller 102 starts controlling the display screen 101 to display. At the same time, the controller 102 on which the operating system with low power consumption runs switches from the operating state to the hibernating state and stop controlling the display screen 101 to display. Based on the requirements of the display device, the multiple controllers 102 switch their states. Therefore, the controller 102 on which the operating system with high power consumption runs does not stay in the operating state, reducing the consumption of the battery power and extending the stand-by time of the display device.

Optionally, the display screen 101 includes an organic light emitting display panel and a touch screen covering the organic light emitting display panel.

The controllers 102 in respective operating states control the organic light emitting display panel and the touch screen covering the organic light emitting display panel to display.

In an embodiment, the touch screen is configured to acquire touch-position information and send the touch-positon information to a specific controller (e.g., the master controller) or a controller which is currently in the operating state. The touch screen can implement the interaction between the user and the display device, making it more convenient for the user to operate the display screen.

In another optional embodiment, the display screen 101 includes an organic light emitting display panel and a transparent glass covering the organic light emitting display panel. The transparent glass arranged in the display screen 101 can effectively protect the organic light emitting display panel.

The present embodiment provides a display device. Different types of operating systems run on different controllers, and the controllers switch their states according to the requirements on the display device and control the display screen to display. The controllers are connected to the display screen through respective interfaces of a same type. This addresses the problem in the related art that, in the case where the operating system is the only system for driving the screen to display and is complex, the operating system of the display device needs to stay in the operating state and the display screen cannot be controlled flexibly, thereby achieving the effects of satisfying the requirements on display and flexibly controlling the display screen.

### Embodiment 2

Fig. 2 is a structure diagram of a display device provided by an embodiment 2. This embodiment is formed by modifying the embodiment described above. As shown in Fig. 2, the controllers include a master controller 103 and a slave controller 104.

A master operating system runs on the master controller 103. A slave operating system runs on the slave controler 104. The power consumption of the slave operating system is lower than the power consumption of the master operating system.

The master controller 103 and the slave controler 104 each, in a respective operating state, controls the display 101 to display. The states of the master controller 103 and the slave controller 104 include operating state and hibernating state. The master controller 103 and the slave controller 104 swtich their states according to the requirements of the display device and control the display screen 101 to display. In an embodiment, when the master controller 103, on which the master operating system runs, switches from the operating state to the hibernating state, the master controller 103 stop controlling the display screen 101 to display. At the same time, the slave controller 104, on which the slave operating system runs, switches from the hibernating state to the operating state and starts controlling the display screen 101 to display. On the contrary, when the master controller 103, on which the master operating system runs, switches from the hibernating state to the operating state, the master controller 103 starts controlling the display screen 101 to display. At the same time, the slave controller 104, on which the slave operating system runs, switches from the operating system to the hibernating system and stops controlling the display screen 101 to display. Based on the requirements of the display device, the master controller 103 and the slave controllers 104 switches their states. Therefore, the master controller 103, on which the master operating system runs, does not stay in the operating state, reducing the consumption of the battery power and extending the stand-by time of the display device.

Optionally, the master operating system is Android OS, and the slave operating system is RTOS. The power consumption of the RTOS is lower than the power consumption of the Android OS. The power consumption of the slave controller 104 on which the RTOS runs is lower than the power consumption of the master controller 103 on which the Android OS runs.

Optionally, the master controller 103 and the slave controller 104 are connected to the display screen 101 through MIPI interfaces.

The present embodiment provides a display device. Operating systems with different power consumption run on the master controller and the slave controller, and the master controller and slave controller switch their states according to the requirements on the display device and control the display screen to display. The master controller and the slave controller are connected to the display screen through respective interfaces of a same type. This addresses the problem in the related art that, in the case where the operating system is the only system for driving the screen to display and is complex, the operating system of the display device needs to stay in the operating state and the display screen cannot be controlled flexibly, thereby achieving the effects of satisfying the requirements on display and flexibly controlling the display screen.

### Embodiment 3

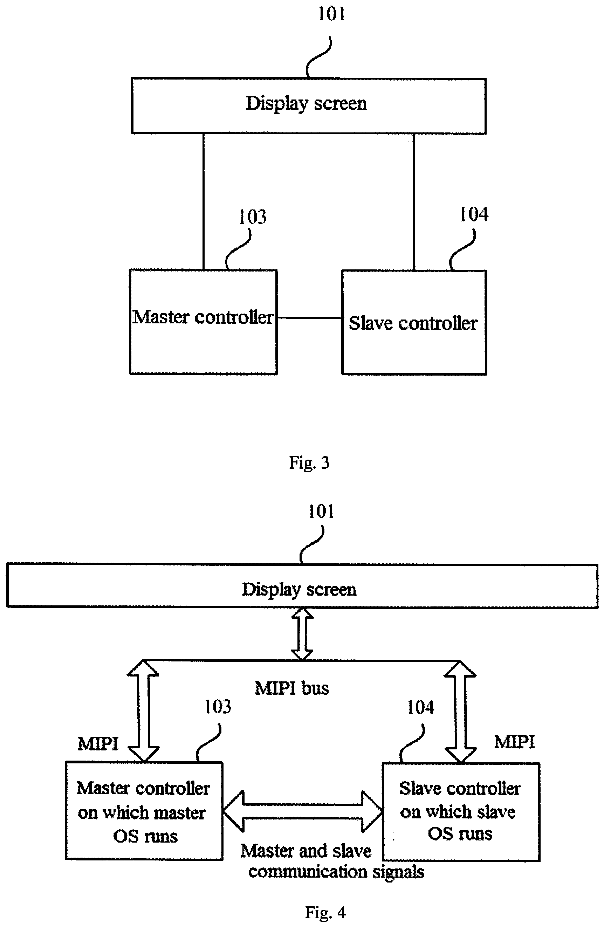

Fig. 3 is a structure diagram of a display device provided by an embodiment 3. This embodiment is formed by optimizing the embodiment described above. The interface of the same type include MIPIs.

The master controller 103 and the slave controller 104 each is connected to the display screen 101 through a respective MIPI.

When master controller 103 is in the hibernating state, the master controller 103 sets its MIPI to a high-impedance state. When the slave controller 104 is in the hibernating state, the slave controller 104 sets its MIPI to the high-impedance state.

When the master controller 103 or the slave controller 104 sets its MIPI to the high-impedance state, it does not control the display screen 101 to display. The MIPI of the display screen 101 is not affected by the master controller 103 or the slave controller 104, thereby improving the isolation between control instructions and reducing the interference.

When the master controller 103 is in the operating state, the master controller 103 sets its MIPI to an activated state. When the slave controller 104 is in the operating state, the master controller 103 sets its MIPI to an activated state.

When the master controller 103 or the slave controller 104 sets its MIPI to the activated state, it controls the display screen 1p1 to display.

When the master controller 103 switches from the operating state to the hibernating state, the master controller 103 stops controller the display screen 101 to display, which includes that the master controller 103 closes its display driver and sets the MIPI connected to the display screen 101 to the high-impedance state. When the master controller 103 switches from the hibernating state to the operating state, the master controller 103 starts controlling the display screen 101 to display, which includes that the master controller 103 opens its display driver and sets the MIPI connected to the display screen to the activated state.

When the slave controller 104 switches from the operating state to the hibernating state, the slave controller 104 stops controller the display screen 101 to display, which includes that the slave controller 104 closes its display driver and sets the MIPI connected to the display screen 101 to the high-impedance state. When the slave controller 104 switches from the hibernating state to the operating state, the slave controller 104 starts controlling the display screen 101 to display, which includes that the slave controller 104 opens its display driver and sets the MIPI connected to the display screen to the activated state.

Optionally, as shown in Fig. 4, the master controller 103 is connected to the slave controller 104.

The master controller 103 is configured to trigger the slave controller 104 to enter an operating state when the master controller 103 switches from the operating state to a hibernating state and to trigger the slave controller 104 to enter the hibernating state when the master controller 103 switches from the hibernating state to the operating state.

The master controller 103 is connected to the controller 104. When the master controller 103 switches between states, the master controller 103 triggers the slave controller 104 to switch between states at the same time. In an embodiment, when the master controller 103 on which the master operating system runs switches from the operating state to the hibernating state, the master controller 103 triggers the slave controller 103 to enter the operating state. When the slave controller 104 on which the slave operating system runs switches from the hibernating state to the operating state and the slave controller 104 opens its display driver and sets the MIPI connected to the display screen to the activated state, the master controller 103 closes its display driver and sets the MIPI connected to the display screen 101 to the high-impedance state.-When the master controller 103 on which the master operating system runs switches from the hibernating state to the operating state, the master controller 103 triggers the slave controller 104 to enter the hibernating state. When the slave controller 104 on which the slave operating system runs switches from the operating state to the hibernating state and the slave controller 104 closes its display driver and sets the MIPI connected to the display screen to the high-impedance state, the master controller 103 opens its display driver and sets the MIPI connected to the display screen to the activated state. Based on the requirements of the display device, the master controller 103 switches between states, and the master controller 103 on which the master operating system runs does not stay in the operating state, reducing the consumption of the battery power and extending the stand-by time of the display device. When the master controller 103 switches between states, the master controller 103 triggers the slave controller 104 to switch between states at the same time. This guarantees the stability and accuracy of the switch of the states of the master controller 103 and the slave controller 104, and improves the stability of the display device.

Fig. 4 is a structure diagram of a display device provided by an embodiment 3. Optionally, as shown in Fig. 4, the master controller 103 and the slave controller 104 each is connected to the display screen 101 through a respective MIPI via a MIPI bus. A master operating system runs on the master controller. A slave operating system runs on the slave controller. The master controller 103 and the slave controller 104 are connected and deliver information to each other via master and slave communication signals.

For the display device provided by the embodiment, operating systems with different power consumption respectively run on the master controller and the slave controller, the master controller and the slave controller switch their states according to the requirements of the display device, and control the display screen to display. The master controller and the slave controller are connected to the display screen through MIPIs. When the master controller switches between states, the master controller triggers the slave controller to switch between states at the same time. This addresses the problem in the related art that, in the case where the operating system is the only system for driving the screen to display and is complex, the operating system of the display device needs to stay in the operating state and the display screen cannot be controlled flexibly, thereby satisfying the requirements on display and flexibly controlling the display screen.

### Embodiment 4

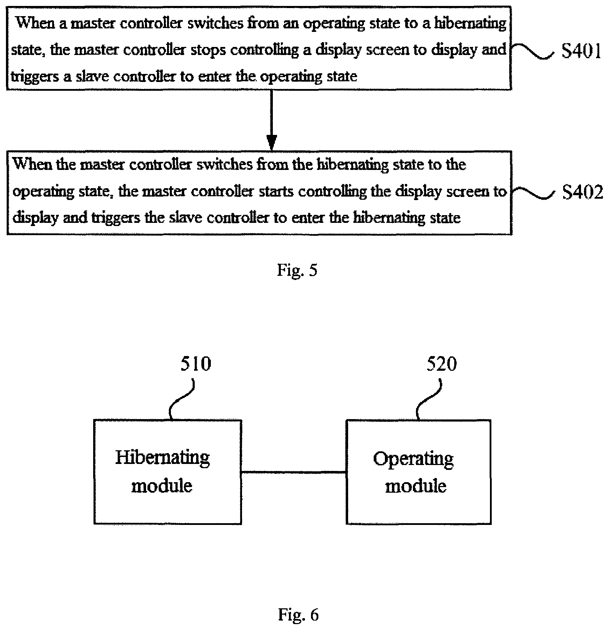

Fig. 5 is a flow chart of a method of controlling screen display provided by an embodiment 4. The present embodiment applies to the case where the requirements on display of the user is satisfied and the display screen is controlled flexibly. As shown in Fig. 5, the method includes a step 410 and a step 420.

In step 410, when a master controller switches from an operating state to a hibernating state, the master controller stops controlling a display screen to display and triggers a slave controller to enter the operating state.

A master operating system runs on the master controller, a slave operating system runs on the slave controller, and power consumption of the slave operating system is lower than power consumption of the master operating system. The master controller and the slave controller each, in a respective operating state, controls the display to display. The states of the master controller and the slave controller include operating state and hibernating state. The master controller and the slave controller switch their states according to the requirements of the display device and control the display screen to display.

For illustration and not for limitation, when the touch screen of the display screen does not receive information from the user within a preset time, or when the display device is in the sport mode or the charging mode, the master controller switches from the operating state to the hibernating state. Or, when the touch screen receives touch information of the user, the master controller switches from the hibernating state to the operating state.

The master controller is connected to the slave controller. When the master controller switches between states, the master controller triggers the slave controller to switch at the same time. In an embodiment, when the master controller on which the master operating system runs switches from the operating state to the hibernating state, the master controller stops controlling the display screen to display and triggers the slave controller to enter the operating state. The slave controller on which the slave operating system runs switches from the hibernating state to the operating state and starts controlling the display screen to display.

Optionally, after the master controller triggers the slave controller to enter the operating state, the method further includes:
the master controller sends basis information to be displayed to the slave controller; the basic information to be displayed is information displayed by the display screen in the control of the slave controller after the slave controller enters the operating state.

The basic information to be displayed includes at least one of the followings: system time, system date, and data on vital signs (e.g., heartbeat or blood pressure in the sport state).

In an embodiment, when the master controller on which the master operating system runs switches from the operating state to the hibernating state, the master controller triggers the slave controller to enter the operating state and sends the basis information to be displayed to the slave controller. The slave controller on which the slave operating system runs switches from the hibernating state to the operating state, receives the basic information to be displayed from the master controller and controls the display screen to display the basic information to be displayed.

In step 420, when the master controller switches from the hibernating state to the operating state, the master controller starts controlling the display screen to display and triggers the slave controller to enter the hibernating state.

When the master controller on which the master operating system runs switches from the operating state to the hibernating state, the master controller starts controlling the display screen to display and triggers the slave controller to enter the operating state. The slave controller on which the slave operating system runs switches from the hibernating state to the operating state and stops controlling the display screen to display. The master controller switches between states according to the requirements of the display device. When the master controller switches between states, the master controller triggers the slave controller to switch between states at the same time. This guarantees the stability and accuracy of the switch of the states of the master controller and the slave controller, and improves the stability of the display device.

When the master controller switches from the hibernating state to the operating state, the master controller stops controlling the display screen to display, and when the master controller switches from the operating state to the hibernating state, the master controller starts controlling the display screen to display.

Optionally, the step in which the master controller stops controlling the display screen to display includes:
the master controller closes its display driver and sets the MIPI connected to the display screen to the high-impedance state,
wherein the step of using the master controller to start controlling the display screen to display comprises:
   using the master controller to open the display driver of the master controller and set the MIPI connected to the display screen to an activated state.

Optionally, the step in which the slave controller stops controlling the display screen to display includes that the slave controller closes its display driver and sets the MIPI connected to the display screen to the high-impedance state; the step in which the slave controller starts controlling the display to display includes that the slave controller opens its display driver and sets the MIPI connected to the display screen to the activated state.

In an embodiment, when the master controller on which the master operating system runs switches from the operating state to the hibernating state, the master controller triggers the slave controller to enter the operating state. When the slave controller on which the slave operating system runs switches from the hibernating state to the operating state and the slave controller opens its display driver and sets the MIPI connected to the display screen to the activated state, the master controller closes its display driver and sets the MIPI connected to the display screen to the high-impedance state. When the master controller on which the master operating system runs switches from the hibernating state to the operating state, the master controller triggers the slave controller to enter the hibernating state. When the slave controller on which the slave operating system runs switches from the operating state to the hibernating state and the slave controller closes its display driver and sets the MIPI connected to the display screen to the high-impedance state, the master controller opens its display driver and sets the MIPI connected to the display screen to the activated state. Based on the requirements of the display device, the master controller switches between states, and the master controller on which the master operating system runs does not stay in the operating state, reducing the consumption of the battery power and extending the stand-by time of the display device. When the master controller switches between states, the master controller triggers the slave controller to switch between states at the same time. This guarantees the stability and accuracy of the switch of the states of the master controller and the slave controller, and improves the stability of the display device.

For the method of controlling screen display provided by the embodiment, the master controller and the slave controller switches their states according to the requirements of the display device and control the display screen to display. The master controller and the slave controller are connected to the display screen through the MIPI. The master controller triggers the slave controller to switch between states at the same time. This addresses the problem in the related art that, in the case where the operating system is the only system for driving the screen to display and is complex, the operating system of the display device needs to stay in the operating state and the display screen cannot be controlled flexibly, thereby satisfying the requirements on display and flexibly controlling the display screen.

### Embodiment 5

Fig. 6 is a structure diagram of a device of controlling screen display provided by an embodiment 5. As shown in Fig. 6, the device includes:
a hibernating module 510 and an operating module 520.

The hibernating module 510 is configured to, when a master controller switches from an operating state to a hibernating state, stop controlling a display screen to display and trigger a slave controller to enter the operating state. The operating module 520 is configured to, when the master controller switches from the hibernating state to the operating state, start controlling the display screen to display and trigger the slave controller to enter the hibernating state. When the slave controller switches from the hibernating state to the operating state, the master controller stops controlling the display screen to display. When the slave controller switches from the operating state to the hibernating state, the master controller starts controlling the display screen to display.

For the device of controlling screen display provided by the embodiment, the master controller and the slave controller switches their states according to the requirements of the display device and control the display screen to display. The master controller and the slave controller are connected to the display screen through the MIPI. The master controller triggers the slave controller to switch between states at the same time. This addresses the problem in the related art that, in the case where the operating system is the only system for driving the screen to display and is complex, the operating system of the display device needs to stay in the operating state and the display screen cannot be controlled flexibly, thereby satisfying the requirements on display and flexibly controlling the display screen.

On the basis of the embodiments described above, the hibernating module 510 may include a control interrupting unit. The control interrupt module is configured to close the display driver of the master controller and set the MIPI connected to the display screen to a high-impedance state.

The operating module 520 may include a control establishing module. The control establishing unit is configured to open the display driver of the master controller and set the MIPI connected to the display screen to an activated state.

On the basis of the embodiments described above, the hibernating module 520 may further include:
an information sending unit, which is configured to send basic information to be displayed to the slave controller; the basic information to be displayed is information displayed by the display screen in the control of the slave controller after the slave controller enters the operating state.

The basic information to be displayed includes at least one of the followings: system time, system date, and data on vital signs.

The device of controlling screen display provided by the embodiment can implement the method of controlling screen display provided by any embodiment, having corresponding function modules required for implementing the method and the effects.

### Embodiment 6

The embodiment further provides a computer readable storage medium. A computer program is stored on the computer readable storage medium and is executed by a processor to implement the method of controlling screen display provided by the embodiment.

The computer storage medium of the present embodiment may may one computer readable medium or a combination of any computer readable mediums. The computer readable medium may be a computer readable signal medium or a computer readable storage medium. The computer readable storage medium for example may be, but not limited to, a system, a device or a component of any type of electric, magnet, light, electromagnet, infrared or semiconductor, or any combination thereof. The specific examples (bu not an exhaustive list) of the computer readable storage medium include: electrical connection with one or more wires, portable computer magnetic disk, hard disk, random access memory (RAM), read-only memory (ROM), erasable programmable read-only memory (EPROM, or flash), optical fiber, compact disk read-only memory (CD-ROM), optical storage device, magnetic storage device, or any combination thereof. Herein, the computer readable storage medium may be any physical medium containing or storing the program, which may be executed by an instruction execution system, device, component or the combination thereof.

The computer readable signal medium may include data signals which are transmitted in the baseband or are transmitted as part of carriers. The data signals carry computer readable program codes. The data signals transmitted in such way may have various forms, which include, but not limited to, magnetic signals, optical signals or any proper combination thereof. The computer readable signal medium may also be any computer readable medium other than the computer readable storage medium. The computer readable medium may send, transmit or transfer the program which is used by or in combination with the instruction execution system, device or component.

The program codes on the computer readable medium may be transferred by means of the medium of any types, which includes, but not limited to, wireless, wire, cable and radio frequency (RF), or any proper combination thereof.

The computer program codes for implementing the operation may be edited in one or more programming languages, or a combination thereof. The programming languages include object-oriented programming languages (e.g., Java, Smalltalk, C++) and process-oriented programming languages (e.g., C language or the like). The program codes may be executed in one of the following manners: all the program codes are executed on a computer of the user, part of the program codes is executed on the computer of the user, the program codes are executed as an independent software package, a part of the program codes is executed on the computer of the user and the other part is executed on a remote computer, all the program codes are executed on the remote computer or a server. In the case where a remote computer is used, the remote computer may be connected to the user computer through a network of any types, including local area network (LAN) and wide area network (WAN), or may be connected to an external computer, e.g., through Internet provided by an Internet service provider.

### Embodiment 7

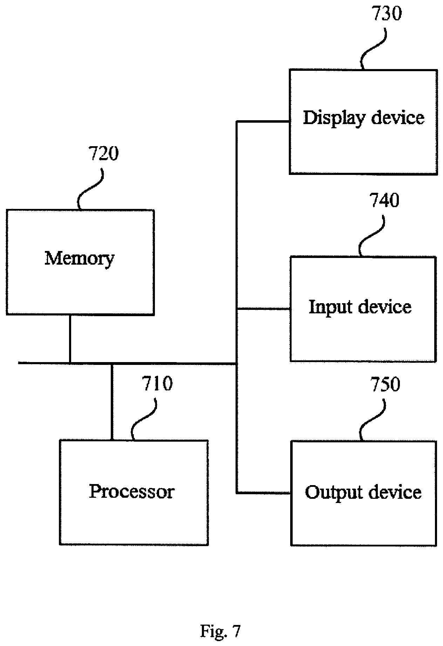

Fig. 7 is a structure diagram of an electronic device provided by an embodiment 7. As shown in Fig. 7, the electronic device includes a processor 710, a memory 720, a display device 730, an input device 740 and an output device 750. The electronic device may include one or more processors 710. Fig. 7 is an example in which one processor 710 is used. The processor 710, the memory 720, the display device 730, the input device 740 and the output device 750 may be connected to each other through a bus or in other manners. Fig. 7 is an example in which a bus is used.

The memory 720, which is a computer readable storage medium, may be used to store a software program, a computer executable program and modules, e.g., program codes/modules corresponding to the method of controlling screen display of the embodiment, such as the hibernating module 510 and the operating module 520 of the device for controlling screen display. The processor 710 executes the software program, instructions and modules stored in the memory 720 to implement various function applications and data processing on the electronic device.

The memory 720 mainly includes a program storage region and a data storage region. The program storage region may store the operating system and the application program required for at least one function. The data storage region may store the data which are created in the use of the terminal. In addition, the memory 720 may include a high-speed random-access memory and may also include a non-volatile memory, e.g., at least one magnetic memory device, flash memory device or any other non-volatile solid-state memory device. In some embodiments, the memory 720 may include a memory which is remote from the processor 710. This memory may be connected to the electronic device through the network. The network may be, but not limited to, Internet, intranet, LAN, mobile communication network or the combination thereof.

The display device 730 may include the display device provided by the embodiment.

The input device 740 may be configured to receive inputted number or character information, and generate a key signal input related to the user settings and function control of the electronic device. The output device 750 may include a voice player.

Optionally, the electronic device is a smartwatch or a smart bracelet.

In general, a battery of a wearable device such as smartwatch or smart bracelet has a small size and thus a small capacity. The shortage of such wearable device is the short stand-by time. In the wearable device described herein, multiple processors on which operating system with different power consumption are used. As such, the battery time of the device is significantly extended and the user experience is apparently improved.

### Industrial applicability

The present disclosure provides a display device. The display device addresses the problem in the related art that, in the case where the operating system is the only system for driving the screen to display and is complex, the operating system of the display device needs to stay in the operating state and the display screen cannot be controlled flexibly, thereby achieving the effects of satisfying the requirements on display and flexibly controlling the display screen.

## Claims

1. A display device, comprising: a display screen and at least two controllers,
at least two operating system each runs on a respective one of the at least two controllers,
the at least two controllers are connected to the display screen through interfaces of a same type, and the at least two controllers each is configured to, in a respective operating state, control the display screen to display.

2. The display device according to claim 1, wherein the controllers include a master controller and a second controller,
a master operating system runs on the master controller, a slave operating system runs on the slave controller, and power consumption of the slave operating system is lower than power consumption of the master operating system.

3. The display device according to claim 2, wherein the master operating system includes an Android operating system, and the slave operating system includes a real-time operating system.

4. The display device according to claim 2, wherein the interfaces of the same type include mobile industry processor interfaces (MIPIs),
wherein the master controller and the slave controller each is connected to the display screen through a respective one of the MIPIs,
wherein when the master controller is in a hibernating state, the master controller sets the MIPI of the master controller to a high-impedance state; when the slave controller is in the hibernating state, the slave controller sets the MIPI of the controller to the high-impedance state.

5. The display device according to claim 4, wherein the master controller is connected to the slave controller,
the master controller is configured to trigger the slave controller to enter an operating state when the master controller switches from the operating state to a hibernating state and to trigger the slave controller to enter the hibernating state when the master controller switches from the hibernating state to the operating state.

6. The display device according to any of claims 1 to 4, wherein the display screen includes an organic light emitting display panel and a touch screen covering the organic light emitting display panel.

7. An electronic device, comprising a display device according to any of claims 1 to 6.

8. A method of controlling screen display, comprising:
when a master controller switches from an operating state to a hibernating state, using the master controller to stop controlling a display screen to display and trigger a slave controller to enter the operating state; and
when the master controller switches from the hibernating state to the operating state, using the master controller to start controlling the display screen to display and trigger the slave controller to enter the hibernating state,
wherein when the slave controller switches from the hibernating state to the operating state, the slave controller stops controlling the display screen to display, and when the slave controller switches from the operating state to the hibernating state, the slave controller starts controlling the display screen to display.

9. The method according to claim 8, wherein the step of using the master controller to stop controlling the display screen to display comprises:
using the master controller to close a display driver of the master controller and set the MIPI connected to the display screen to a high-impedance state,
wherein the step of using the master controller to start controlling the display screen to display comprises:
using the master controller to open the display driver of the master controller and set the MIPI connected to the display screen to an activated state.

10. The method according to claim 8, wherein after the master controller triggers the slave controller to enter the operating state, the method further comprises:
using the master controller to send basic information to be displayed to the slave controller, wherein the basic information to be displayed is information displayed by the display screen in the control of the slave controller after the slave controller enters the operating state,
wherein the basic information to be displayed includes at least one of the followings: system time, system date, and data on vital signs.
